# EUROPEAN PATENT SPECIFICATION

(11) **EP 1 186 608 B1**
(45) Date of publication and mention of the grant of the patent: **04.02.2004**
(21) Application number: 01203955.8
(22) Date of filing: 23.10.1997
(51) Int. Cl.: C07F 5/02

(54) **Method for the synthesis and use of pentafluorophenyl lithium to produce tetrakis pentafluorophenyl borate**
Methode zur Synthese und Verwendung von Pentafluorophenyllithium um Tetrakis-Pentafluorophenyl substituierte Borate herzustellen
Procédé de synthèse et d'utilisation de pentafluorophényl lithium pour produire du tetrakis pentafluorophényl borate

(30) Priority: 23.10.1996 US 734954
(43) Date of publication of application: 13.03.2002
(62) Divisional of application: 97913713.0
(73) Proprietor: BOULDER SCIENTIFIC COMPANY, Mead, CO 80542 (US)
(72) Inventor: Krafft, Terry E., Longmont, CO 80504 (US)
(74) Representative: Marchant, James Ian

(56) References cited:
- EP-A- 0 608 563

## Description

### TECHNICAL FIELD

This invention relates to methods for the synthesis of pentafluorophenyl lithium and to the production of chemicals derived from pentafluorophenyl lithium. More particularly, the invention relates to methods which reduce the safety hazards which may be associated with the bulk preparation of pentafluorophenyl lithium and its use to synthesize other chemicals.

### BACKGROUND OF THE INVENTION

Tetrakis (pentafluorophenyl) borate derivatives are extensively used as olefin polymerization co-catalysts with cyclopentadienyl transition metal complexes. See, e.g., U.S. Patent 5,470,993, column 17, line 20 to column 18, line 10 (listing certain trisubstituted ammonium salts of tetrakis (pentafluorophenyl) borates useful as activating co-catalysts). Pentafluorophenyl lithium is frequently used as the source of the pentafluorophenyl group. The synthesis of such borate derivatives is constrained by the tendency of pentafluorophenyl lithium to decompose as the temperature increases. Explosive decomposition has been reported.

Hence, pentafluorophenyl lithium is usually generated and used at low temperatures such as -78°C. See generally published European patent application 0604961 A2, Col. 1, 11. 23-28.

EP-A-0,608,563 provides a production method of tetrakis(pentafluorophenyl)borate derivatives represented by a following general formula [VII]

(C₆F₅)₄BM [VII]

(wherein M denotes an alkali metal ion), wherein, with 1 equivalent of pentafluorobenzene represented by a following formula [I],

C₆HF₅ [I]

0.5 to 1.5 equivalents of organometallic compound represented by a general formula [II]

RM [II]

(wherein M denotes an alkali metal ion, R denotes a hydrocarbon group with carbon atoms of 1 to 10 and the said hydrocarbon group may contain functional groups having no influence on the reaction), are reacted at a temperature range from -120 to 80°C in an ether type solvent, a hydrocarbon type solvent or a mixed solvent of the ether type solvent with the hydrocarbon type solvent to generate pentafluorophenyl alkali metal salt represented by a following general formula [III]

C₆F₅M [III]

(wherein M denotes an alkali metal ion), and, with 1 equivalent of boron compound represented by a general formula [IV]

BX₃ [IV]

wherein X denotes a halogen atom, substituent represented by a following general formula [V]

OR [V]

(wherein R denotes a hydrocarbon group with carbon atoms of 1 to 10 and the said hydrocarbon may contain functional groups having no influence on the reaction) or substituent represented by a following general formula [VI]

NRR' [VI]

(wherein R and R' denote identically or differently hydrogen atoms or hydrocarbon groups with carbon atoms of 1 to 20, said hydrocarbon group may contain functional groups having no influence on the reaction and R and R' may link one another to form a ring), and may form 1:1 complex with the ether type solvent, not less than 3.7 equivalents of pentafluorophenyl metal compound represented by the formula [III] are reacted.

### SUMMARY OF THE INVENTION

This invention provides a method for producing a lithium tetrakis (pentafluorophenyl) borate which comprises:
(i) preparing a mixture of a pentafluorophenyl compound and a subsequent reactant in solution in a non-interfering solvent and cooling the resulting mixture to between -10°C and -40°C, wherein the subsequent reactant is selected from (C₆H₅)₃B, (C₆F₅)₃B, BX₃ or MXn in which X is a halide or an anionic group, and R is a straight or branched chain 1 to 10 carbon atom alkyl or aryl group, and M is a metal, or metalloid, and n indicates the number of X entities required to satisfy the formal valance of M.;
(ii) adding a solution of an alkyl lithium in a non-interfering solvent; and
(iii) permitting the resultant reaction mixture to warm to room temperature; wherein lithium tetrakis (pentafluorophenyl) borate is produced.

### DEFINITIONS

Pentafluorophenyl compound or reactant - A compound having the formula C₆ F₅X in which X is hydrogen, chlorine, bromine or iodine.

Alkyl Lithium - A compound having the formula RLi in which R is a straight or branched chain saturated or unsaturated alkyl group having 1 to 8 carbon atoms. R is preferably a normal or branched chain 1 to 6 carbon atom alkyl group. Normal and butyl lithium are preferred. Alkyl lithium compounds are preferably utilized in 1 to 10 molar solution in a non-interfering hydrocarbon solvent, preferably a 5 to 10 carbon atom aliphatic hydrocarbon solvent such as hexane. n-butyl lithium is commercially available in solution in hexanes.

Non-interfering Solvent - A solvent or mixture of solvents which does not adversely affect the pentafluorophenyl or the alkyl lithium reactants, the pentafluorophenyl lithium synthesis or the reaction of pentafluorophenyl lithium with a subsequent reactant.

Subsequent Reactant - A compound which reacts, preferably directly, with pentafluorophenyl lithium as produced according to the invention. Such subsequent reactants may include but are not limited to (C₆F₅)₃B, (C₆H₅)₃B, compounds having the formula BX₃ in which X is a halide, e.g. BF₃ or BCl₃, or X is an anionic group such as OR⁻ or NR₂⁻, in which R is a straight or branched chain 1 to 10 carbon atom alkyl or aryl group, or MZn in which M is a metal, or metalloid, preferably nickel, Z is a halide, preferably chlorine or an anionic group such as OR⁻ or NR₂⁻, in which R is as defined above, and n indicates the number of Z entities required to satisfy the formal valance of M. Such compounds include NiCl₂ and NiBr₂.

### DETAILED DESCRIPTION OF THE INVENTION

Pursuant to the invention, as a first step, a mixture of a subsequent reactant, e.g., (C₆F₅)₃B, and a pentafluorophenyl compound is prepared. The mixture is pre-cooled to a temperature of, for example, -10°C to - 40°C. As a second step, a solution of an alkyl lithium in a non-interfering solvent is added to the mixture, which is allowed to warm to room temperature. In one embodiment of the invention, an ether, e.g., ethyl ether, may be added to the pre-cooled mixture of pentafluorophenyl compound and the subsequent reactant e.g., (C₆F₅)₃B. This procedure is illustrated by the following Example 1.

### EXAMPLE 1

Bromopentafluorobenzene (3.90g) was combined with (C₆F₅)₃B (7.92g in 222g of Isopar). Ether (50 ml) was added and the mixture was cooled to -32°C. nBuLi (9.67mL, 1.6M) in hexanes was added and the mixture was allowed to warm to room temperature. Lithium tetrakis (pentafluorophenyl) borate etherate was isolated (10.1g, 74.9% yield) as the product of the reaction. ¹⁹F NMR indicated a purity of 88.3% and ¹H NMR showed no butyl groups contained in the product.

## Claims

1. A method for producing a lithium tetrakis (pentafluorophenyl) borate which comprises:
(i) preparing a mixture of a pentafluorophenyl compound and a subsequent reactant in solution in a non-interfering solvent and cooling the resulting mixture to between -10°C and -40°C, wherein the subsequent reactant is selected from (C₆H₅)₃B, (C₆F₅)₃B, BX₃ or MXn in which X is a halide or an anionic group and M is a metal, or metalloid, and n indicates the number of X entities required to satisfy the formal valance of M.;
(ii) adding a solution of an alkyl lithium in a non-interfering solvent; and
(iii) permitting the resultant reaction mixture to warm to room temperature;
wherein lithium tetrakis (pentafluorophenyl) borate is produced.

2. A method according to claim 1 in which an ether is added to said solution produced in step (i).

3. A method according to claim 1 or claim 2 in which the pentafluorophenyl compound is selected from pentafluorophenyl bromide, pentafluorophenyl chloride and pentafluorobenzene.

4. A method according to claim 1 wherein the subsequent reactant is selected from the group consisting of (C₆H₅)₃B, (C₆F₅)₃B, BF₃, BCl₃, B(OR)₃, B(NR₂)₃, NiCl₂ and NiBr₂, in which R is a straight or branched chain 1 to 10 carbon atom alkyl or aryl group.

## Patentansprüche

1. Verfahren zur Herstellung eines Lithiumtetrakis-(pentafluorophenyl)borats, das umfasst:
(i) Herstellen eines Gemisches aus einer Pentafluorophenylverbindung und einem Folgereaktant in Lösung in einem nicht störenden Lösungsmittel und Kühlen des resultierenden Gemisches auf zwischen -10°C und -40°C, wobei der Folgereaktant aus (C₆H₅)₃B, (C₆F₅)₃B, BX₃ oder MXn ausgewählt ist, worin X ein Halogenid oder eine anionische Gruppe ist und M ein Metall oder Metalloid ist und n die Anzahl der Einheiten X angibt, die erforderlich ist um die formale Valenz von M abzusättigen;
(ii) Zugabe einer Lösung einer Alkyllithiumverbindung in einem nicht störenden Lösungsmittel; und
(iii) Erwärmen lassen des resultierenden Reaktionsgemisches auf Raumtemperatur, wobei Lithiumtetrakis(pentafluorophenyl)borat hergestellt wird.

2. Verfahren nach Anspruch 1, worin ein Ether zu der in Schritt (i) hergestellten Lösung gegeben wird.

3. Verfahren nach Anspruch 1 oder Anspruch 2, worin die Pentafluorophenylverbindung aus Pentafluorophenylbromid, Pentafluorophenylchlorid und Pentafluorobenzol ausgewählt ist.

4. Verfahren nach Anspruch 1, worin der Folgereaktant aus der Gruppe bestehend aus (C₆H₅)₃B, (C₆F₅)₃B, BF₃, BCl₃, B(OR)₃, B(NR₂)₃, NiCl₂ und NiBr₂ ausgewählt ist, worin R eine geradkettige oder verzweigtkettige Alkyl- oder Arylgruppe mit 1 bis 10 Kohlenstoffatomen ist.

## Revendications

1. Procédé de préparation de tétrakis(pentafluorophényl)borate de lithium, qui comprend les étapes suivantes :
(i) préparation d'un mélange d'un composé de pentafluorophényle et d'un réactif ultérieur en solution dans un solvant non interférant, et refroidissement du mélange résultant entre -10 °C et - 40 °C, le réactif ultérieur étant choisi parmi (C₆H₅)₃B, (C₆F₅)₃B, BX₃ et MXn, où X est un halogénure ou un groupe anionique, et M est un métal ou un métalloïde, et n indique le nombre d'entités X requises pour satisfaire la valence formelle de M ;
(ii) addition d'une solution d'un alkyllithium dans un solvant non interférant ; et
(iii) réchauffage à la température ambiante du mélange réactionnel résultant ;
produisant ainsi le tétrakis(pentafluorophényl)borate de lithium.

2. Procédé suivant la revendication 1, dans lequel on ajoute un éther à ladite solution produite dans l'étape (i).

3. Procédé suivant la revendication 1 ou la revendication 2, dans lequel le composé de pentafluorophényle est choisi parmi le bromure de pentafluorophényle, le chlorure de pentafluorophényle et le pentafluorobenzène.

4. Procédé suivant la revendication 1, dans lequel le réactif ultérieur est choisi dans le groupe constitué par (C₆H₅)₃B, (C₆F₅)₃B, BF₃, BCl₃, B(OR)₃, B(NR₂)₃, NiCl₂ et NiBr₂, où R est un groupe alkyle ou aryle à chaîne linéaire ou ramifiée, ayant 1 à 10 atomes de carbone.
